# EUROPEAN PATENT APPLICATION

(11) **EP 4 557 219 A1**
(43) Date of publication of application: **21.05.2025**
(21) Application number: 23852421.9
(22) Date of filing: 31.07.2023
(51) Int. Cl.: G06T 7/55

(54) **INFORMATION PROCESSING DEVICE, AND INFORMATION PROCESSING METHOD**

(30) Priority: 06.08.2022 US 202263395811 P
(71) Applicant: Morgenrot Inc., Tokyo 102-0083 (JP)
(72) Inventor: NAKAMURA Masamichi, Tokyo 107-0052 (JP); HARADA Takahiro, Tokyo 107-0052 (JP); INOUE Hirotaka, Tokyo 107-0052 (JP)
(74) Representative: Appleyard Lees IP LLP
(86) International application number: PCT/JP2023/027953
(87) International publication number: WO 2024/034449

(57) **Abstract**

The present invention improves the convenience in generating a three-dimensional model using a two-dimensional image. A depth data acquisition unit acquires, for each of N (N being an integer of two or higher) viewpoints, depth data indicating the depth from a predetermined viewpoint to a feature point of an object.

A surface labeling unit 53 generates labeling data indicating a result of labeling the surface of the object on the basis of the N items of depth data. An image data acquisition unit 54 acquires M (M being an integer of N or lower) items of image data obtained as a result of capturing the object from a viewpoint synchronized with each of M viewpoints among the N viewpoints. A three-dimensional model generation unit 55 generates a three-dimensional model for the object on the basis of the M items of image data and the labeling data.

## Description

### TECHNICAL FIELD

The present invention relates to an information processing device, and an information processing method.

### BACKGROUND ART

Conventionally, there have been technologies of generating a three-dimensional model from a two-dimensional image (many two-dimensional images) including a subject (for example, see Patent Document 1 and Non-Patent Document 1).

### Citation List

### Patent Document

Patent Document 1: Japanese Unexamined Patent Application, Publication No. 2010-145186

### Non-Patent Document

Non-Patent Document 1: Thomas M. et Al., "Instant Neural Graphics Primitives with a Multiresolution Hash Encoding", ACM Trans. Graph., Vol.4, Num.4, pp.102:1--102:15, July 2022,https://doi.org/10.1145/3528223.3530127

### DISCLOSURE OF THE INVENTION

### Problems to be Solved by the Invention

However, the conventional technologies, including those described in Patent Document 1 and Non-Patent Document 1 mentioned above, cannot sufficiently meet demands in terms of accuracy and generation speed in generating a three-dimensional model.

The present invention has been made in view of such circumstances, and an object thereof is to improve convenience in generating a three-dimensional model using a two-dimensional image.

### Means for Solving the Problems

To achieve the object, an information processing device as one aspect of the present invention includes:
a depth data acquisition section that acquires depth data at each of N (N being an integer value of two or higher) viewpoints, the depth data indicating a depth from a predetermined viewpoint to a feature point of a target object;
an object surface labeling section that generates labeling data indicating a result of labeling a surface of the target object, based on the N pieces of depth data;
an image data acquisition section that acquires M (M being an integer value of N or lower) pieces of image data obtained as a result of capturing images of the target object from viewpoints synchronized with M viewpoints, respectively, among the N viewpoints; and
a model generation section that generates a three-dimensional model for the target object, based on the M pieces of image data and the labeling data.

An information processing method as another aspect of the present invention is an information processing method corresponding to the above-described information processing device as one aspect of the present invention.

### Effects of the Invention

According to the present invention, it is possible to improve convenience in generating a three-dimensional model using a two-dimensional image.

### BRIEF DESCRIPTION OF THE DRAWINGS

FIG. 1 shows an outline of the present service that can be achieved by a model generation device according to one embodiment of an information processing device of the present invention;
FIG. 2 shows an example of a method of disposing a camera and a lidar to acquire depth data and image data in the present service shown in FIG. 1;
FIG. 3 is a block diagram showing an example of a hardware configuration of the model generation device applied to the present service described using FIG. 1, that is, the model generation device according to the one embodiment of the information processing device of the present invention;
FIG. 4 is a functional block diagram showing an example of a functional configuration of the model generation device in FIG. 3; and
FIG. 5 shows an example of blocks for generating a three-dimensional model, in the model generation device having the functional configuration in FIG. 4.

### PREFERRED MODE FOR CARRYING OUT THE INVENTION

Hereinafter, an embodiment of the present invention is described with reference to the drawings.

An embodiment of an information processing device of the present invention is premised on the use of an algorithm of generating a three-dimensional model based on a two-dimensional image. In other words, a service (hereinafter, referred to as the "present service") to which the embodiment of the information processing device of the present invention is applied is a service in which for a predetermined target object existing in the real world, a two-dimensional image is acquired and a three-dimensional model is generated from the two-dimensional image.

First, a conventional basic technology according to Patent Document 1 and the like mentioned above is described. In conventional photogrammetry technology, an algorithm has been adopted in which a feature point is extracted from each of multiple images obtained by capturing a target object from a plurality of viewpoints, a point cloud in a three-dimensional space is generated by associating the respective feature points from the multiple images, a point cloud is further added from points other than the feature points, and a three-dimensional image is thus generated. Such an algorithm is an algorithm that reconstructs distances from some viewpoints to feature points as a point cloud in a three-dimensional space based on triangulation technology, that is, performs linear complementation, in a manner of speaking. Accordingly, the conventional technologies according to Patent Document 1 and the like have the problem that the reproducibility of an angle between an image and an image is very poor.

In contrast, in recent years, with the development of machine learning technology, NeRF (Neural Radiance Fields) using a neural network and techniques (algorithms) developed from NeRF have been proposed. NeRF is an algorithm that can perform non-linear complementation between a plurality of viewpoints through a neural network. More specifically, in NeRF, first, a coarse grid is generated and a learning process is executed, and then learning is performed in such a manner that a dense grid is generated from a result of the learning process, whereby an ultimate three-dimensional model can be outputted as a result of the learning.

Moreover, in a technique (algorithm) called instant-ngp described in Non-Patent Document 1, training data is encoded by using a hash function at the time of a learning process, whereby, for example, processing that the learning process in conventional NeRF requires an approximately three-day period to complete can be completed by a learning process that takes a few seconds.

Premised on such conventional technologies, the present invention realizes a higher-speed learning process for generating a three-dimensional model.

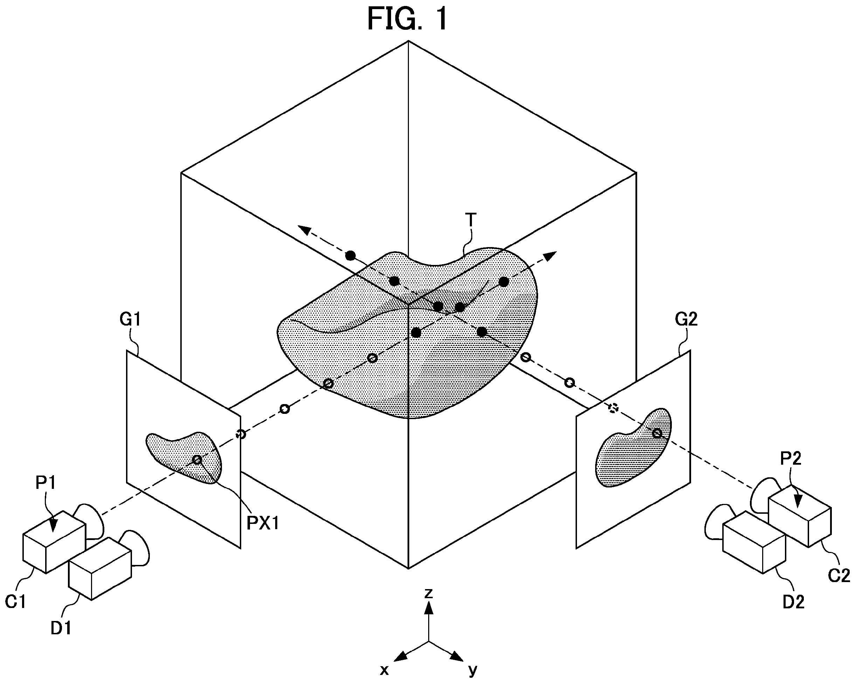

Using an example in FIG. 1, an outline of a flow of generating a three-dimensional model in the present service is described. In FIG. 1, a target object T for which a three-dimensional model is generated in the present service is depicted in a three-dimensional space.

In the present service, the three-dimensional model for the target object T is generated by using depth data obtained as a result of measurement by a lidar from N viewpoints (N being an integer value of two or higher), and image data on captured images captured by a camera from M viewpoints (M being an integer value of N or lower), to generate the three-dimensional model for the target object T.

Note that hereinafter, for simplicity of description, a description is given, assuming that pairs of depth data and image data acquired at the same time at a certain viewpoint are used in the description of FIG. 1, although depth data and image data may be acquired at different points of time. Moreover, in the description of FIG. 1, it is assumed that N = M = 2, and a description is given, using two viewpoints P1 and P2. Additionally, a plurality of points of place is referred to collectively as point P when it is not necessary to make a distinction between the individual points of place.

Note that when depth data and image data from the same viewpoint are acquired, a technique as follows can be used. Specifically, for example, as a first technique, a camera C1 is placed at the viewpoint P1 in FIG. 1 and image data is acquired from the camera C1, and thereafter, a lidar D1 is placed at the viewpoint P1 and depth data is acquired from the lidar D1. Thus, two pairs of depth data and image data, each pair from the same viewpoint, are acquired.

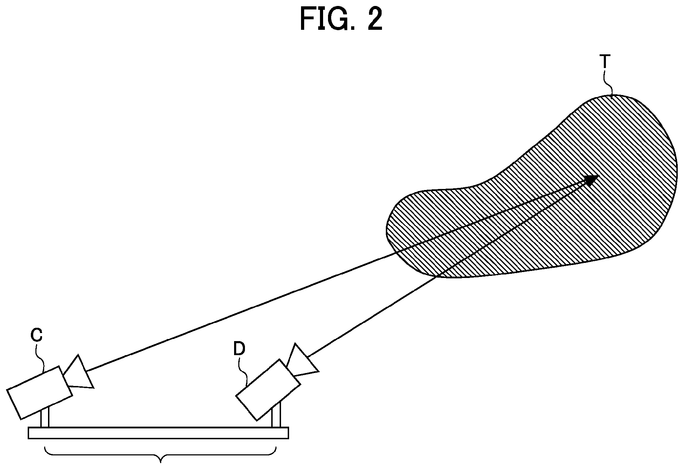

FIG. 2 shows an example of a method of disposing a camera and a lidar to acquire depth data and image data in the present service shown in FIG. 1. For example, as a second technique, the camera C1 and the lidar D1 are fixed to each other by using a predetermined jig beforehand as shown in FIG. 2, and a state is created in which the camera C1 is disposed at the viewpoint P1. Next, image data is acquired from the camera C1, and simultaneously, depth data is acquired from the lidar D1. Then, relative positions between the camera C1 and the lidar D1 and respective measurement directions (viewpoints) according to the predetermined jig are calibrated, whereby the depth data and the image data from the same viewpoint are acquired. Here, since both the image data and the depth data are associated with the same viewpoint as a result of calibration, it can be said that the image data and the depth data are synchronized with each other. Note that hereinafter, a description is given, assuming that the second technique is adopted in the present service.

First, a captured image G1 is captured that is obtained as a result of capturing the target object T by using the camera C1 from the viewpoint P1 in a positive direction of an X-axis of the target object T. At the time, depth data from a viewpoint synchronized with the viewpoint P1 is acquired simultaneously by using the lidar D1. The depth data is calibrated as appropriate, as described above. Information on a shape and a color of the target object T seen from the viewpoint P1 is included in the captured image G1.

Next, a captured image G2 is captured that is obtained as a result of capturing the target object T by using a camera C2 from the viewpoint P2 in a positive direction of a Y-axis of the target object T. At the time, depth data from a viewpoint synchronized with the viewpoint P2 is acquired simultaneously by using a lidar D2. The depth data is calibrated as appropriate, as described above. Information on a shape and a color of the target object T seen from the viewpoint P2 is included in the captured image G2.

Note that although the description is given in the description of FIG. 1, assuming that the cameras C1 and C2 and the lidars D1 and D2 are used at the viewpoints P1 and P2, respectively, image data and depth data may be acquired sequentially by moving the camera C1 and the lidar D1 from the viewpoint P1 to the viewpoint P2 and using the camera C1 and the lidar D1 for the camera C2 and the lidar D2. When it is not necessary to make a distinction between cameras and between lidars at a plurality of points of place as described above, such cameras and lidars are referred to collectively as "camera C" and "lidar D", respectively. In such a case, images captured by the cameras C are referred to as "captured image G"**.**

For example, in the conventional techniques according to Patent Document 1 and the like, since a three-dimensional model is generated by using only image data on a plurality of captured images, such as the captured images G1 and G2, it has been difficult to complement a shadowed portion and the like of an image. Moreover, when a higher-definition three-dimensional model is generated, even the techniques according to Non-Patent Document 1 and the like require any one of a certain amount of calculation time and considerable calculation resources.

In the present service, although details will be described later, the three-dimensional model for the target object T is generated by using the image data on the captured images G acquired by the cameras C at the plurality of viewpoints P, and the depth data acquired by the lidars D as described above. Thus, in the present service, the generation of a three-dimensional model can be performed faster.

Referring to FIG. 1, an arrow passing through a predetermined pixel PX1 of the captured image G1 from the viewpoint P1 is depicted by using a dashed-double-dot line. Open circles and closed circles are depicted at points on the arrow indicated by the dashed-double-dot line.

A point on the arrow indicated by an open circle indicates that the point is before contact with the target object T when seen from the viewpoint P1. A point on the arrow indicated by a closed circle indicates that the point is after contact with the target object T when seen from the viewpoint P1.

In other words, for example, assuming that a line of sight advances from the viewpoint P1 along the arrow indicated by the dashed-double-dot line, while the line of sight passes points on the arrow indicated by the open circles from the viewpoint P1, the target object T is not present, and the line of sight therefore collides with nothing. Then, collision with the target object T occurs in an interval between a point on the arrow indicated by an open circle and a point on the arrow indicated by a closed circle. A color at the point where the collision with the target object T occurs is recorded as the color of the predetermined pixel PX1 of the captured image G1. Further, when the target object T is not transparent, images at points after the point of the first closed circle are not captured in the captured image G1. As described above, the color of the predetermined pixel PX1 of the captured image G1 is the color of the target object T at the point of place where the collision with the target object T occurs on the arrow passing through the predetermined pixel PX1 from the viewpoint P1.

In the present service, the depth data from the viewpoint P1 is measured simultaneously, as described above. Thus, from the depth data, a distance between the point of the open circle and the point of the closed circle mentioned above is acquired as depth data. In the present service, the speed of generating a three-dimensional model is improved by restricting an area that is taken into consideration in generating the three-dimensional model.

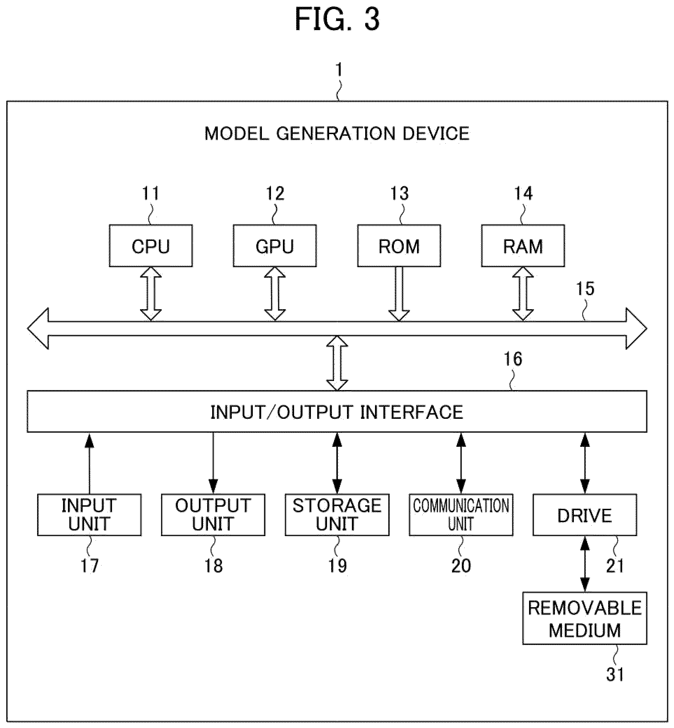

Hereinabove, the outline of the present service has been described using FIGS. 1 and 2. Hereinafter, a model generation device to which the present service is applied is described using FIGS. 3 to 5.

FIG. 3 is a block diagram showing an example of a hardware configuration of the model generation device applied to the present service described using FIG. 1, that is, the model generation device as an embodiment of the information processing device of the present invention. The model generation device 1 includes a CPU 11, a GPU 12, a ROM 13, a RAM 14, a bus 15, an input/output interface 16, an output unit 17, an input unit 18, a storage unit 19, a communication unit 20, and a drive 21.

The CPU 11 and the GPU 12 execute various processes according to programs recorded on the ROM 13, or programs loaded from the storage unit 19 onto the RAM 14. The GPU 12 includes a computation unit that performs software processing and an RT core that performs hardware processing. The RT core performs ray tracing in a predetermined three-dimensional space including a target object by using hardware. Data and the like required when the CPU 11 and the GPU 12 execute the various processes are also stored in the RAM 14 as appropriate.

The CPU 11, the GPU 12, the ROM 13, and the RAM 14 are connected to each other via the bus 15. The input/output interface 16 is also connected to the bus 15. The output unit 17, the input unit 18, the storage unit 19, the communication unit 20, and the drive 21 are connected to the input/output interface 16.

The output unit 17 includes a display, a speaker, and the like and outputs various kinds of information as an image and sound. The input unit 18 includes a keyboard, a mouse, and the like and receives various kinds of information as inputs.

The storage unit 19 includes a hard disk, a DRAM (Dynamic Random Access Memory), and the like and stores various kinds of data. The communication unit 20 performs communication with other devices through a network including the Internet.

A removable medium 31, such as a magnetic disk, an optical disk, a magneto-optic disk, or a semiconductor memory, is attached to the drive 21 as appropriate. A program read by the drive 21 from the removable medium 31 is installed in the storage unit 19 as necessary. The removable medium 31 can also store the various kinds of data stored in the storage unit 19, similarly to the storage unit 19.

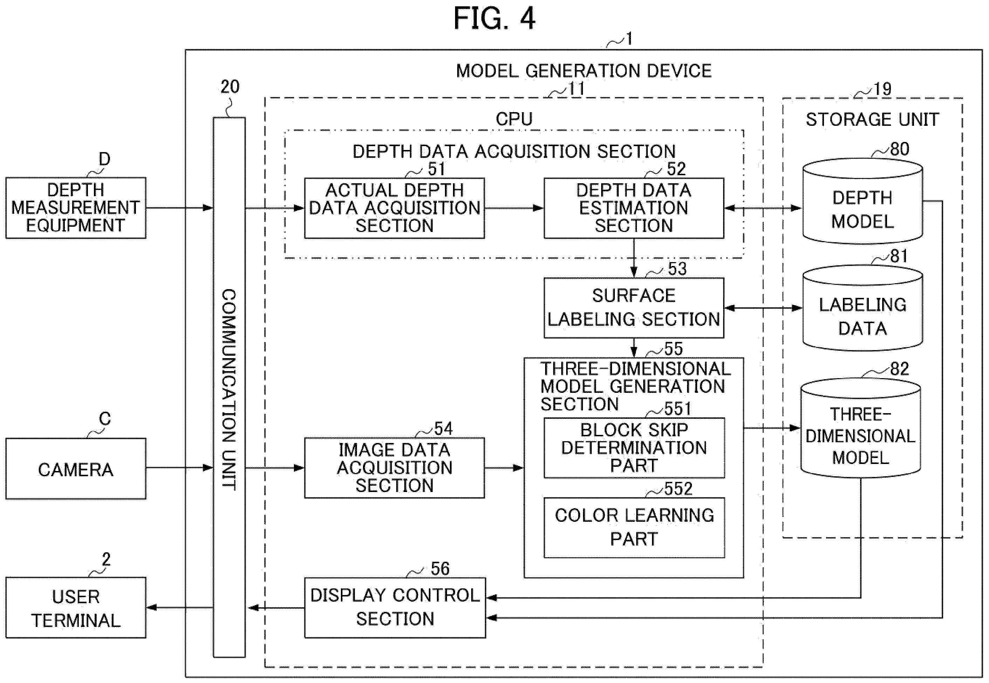

Next, with reference to FIG. 4, a functional configuration of the model generation device 1 having the hardware configuration shown in FIG. 3 is described. FIG. 4 is a functional block diagram showing an example of the functional configuration of the model generation device in FIG. 3.

As shown in FIG. 4, the CPU 11 of the model generation device 1 functions as an actual depth data acquisition section 51, a depth data estimation section 52, a surface labeling section 53, an image data acquisition section 54, a three-dimensional model generation section 55, and a display control section 56. In an area of the storage unit 19, a depth model 80, labeling data 81, and a three-dimensional model 82 are stored.

A depth data acquisition section acquires depth data from N predetermined viewpoints to a target object T. The depth data includes information on a depth from each predetermined viewpoint to a feature point of the target object T.

Hereinafter, an example of a functional configuration of the depth data acquisition section is described using FIG. 4. The depth data acquisition section includes the actual depth data acquisition section 51 and the depth data estimation section 52. The actual depth data acquisition section 51 acquires M pieces of actual depth data obtained as a result of measurement from each of M viewpoints in the real world. In other words, the actual depth data acquisition section 51 acquires the M pieces of actual depth data obtained as a result of measurement using the lidar D from each of the M viewpoints in the real world. The depth data estimation section 52 estimates N pieces of depth data, based on the M pieces of actual depth data acquired by the actual depth data acquisition section 51, and acquires the N pieces of depth data estimated. Specifically, for example, the depth data estimation section 52 performs a learning process according to an algorithm using a neural network, based on the M pieces of actual depth data acquired by the actual depth data acquisition section 51, and thereby generates or updates a three-dimensional depth model 80 for the target object T. The three-dimensional depth model 80 for the target object T is a model that can infer depth data from a predetermined viewpoint. The depth model 80 is stored in one area of the storage unit 19 and managed.

The surface labeling section 53 generates labeling data 81 that indicates a result of labeling a surface of the target object T, based on the N pieces of depth data acquired by the depth data acquisition section. Labeling refers to recording the position of a surface of the target object T in a three-dimensional space, at a position in a three-dimensional virtual space in which a three-dimensional model is generated. An example of the labeling will be described later by using FIG. ***.** The labeling data 81 is stored in one area of the storage unit 19 and managed.

The image data acquisition section 54 acquires image data on M captured images G obtained as a result of capturing images of the target object T from the viewpoints P synchronized with M (M being an integer value of N or lower) viewpoints, respectively, among the N viewpoints.

The three-dimensional model generation section 55 generates a three-dimensional model 82 for the target object T, based on the M pieces of image data acquired by the image data acquisition section 54, and the labeling data 81. The three-dimensional model 82 is stored in one area of the storage unit 19 and managed. The three-dimensional model generation section 55 includes a block skip determination part 551 and a color learning part 552.

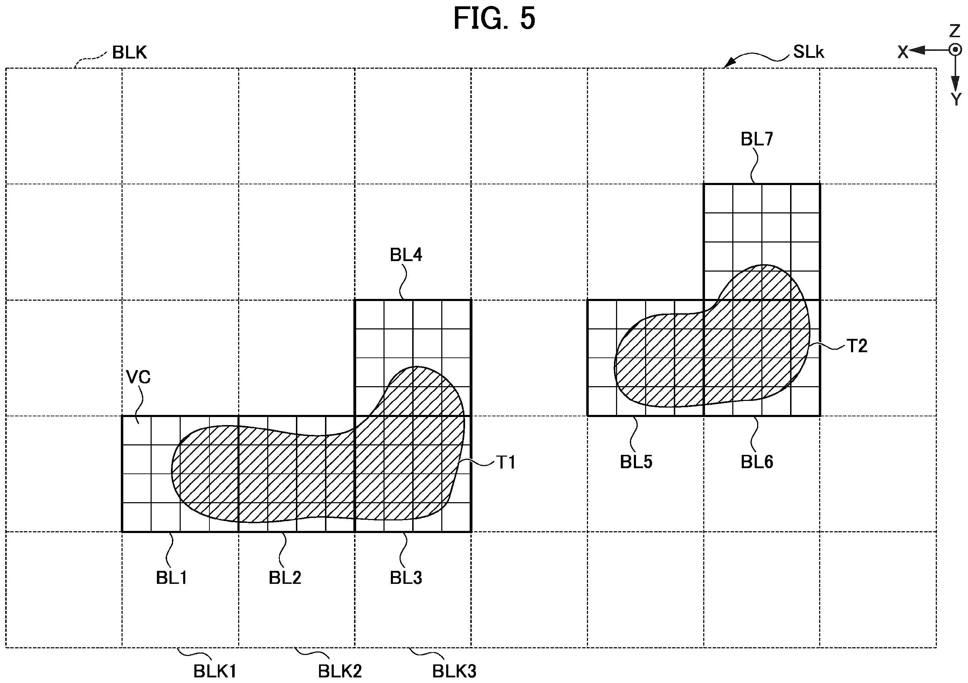

In generating training data for generating a three-dimensional model, the block skip determination part 551 determines, based on the labeling data 81, whether or not a surface of the target object T is present in a block that is passed by a line of sight (an arrow indicated by a dashed-double-dot line in FIG. 1) corresponding to a predetermined pixel of a captured image G from a viewpoint P. When the block skip determination part 551 determines that a surface of the target object T is not present in the block, the block is determined not to contribute to the color of the predetermined pixel of the captured image G. In contrast, when the block skip determination part 551 determines that a surface of the target object T is present in the block, the block is determined to have a possibility of contributing to the color of the predetermined pixel of the captured image G. Then, training data is generated with regard to the block determined to contribute to the color of the predetermined pixel through determination by the block skip determination part 551. Note that an example of a block skipped by the block skip determination part 551 will be described later by using FIG. 5.

The color learning part 552 generates or updates the three-dimensional model 82 by performing learning that assigns colors to the three-dimensional model 82, using the training data generated based on a result of determination by the block skip determination part 551. Specifically, the training data used by the color learning part 552 is data with which the learning process is (practically) not executed with regard to those blocks that do not contribute to the colors of predetermined pixels of the captured images G, as described above. Thus, a time period for the learning process by the color learning part 552 is reduced.

As described above, by using depth data in three-dimensional modeling, learning is omitted in a space (block-unit space) in which the target object T is not present, and high-speed modeling is realized. Moreover, in modeling, when a high-definition grid (voxels) compared to blocks is to be generated, voxels in a space (block-unit space) in which a surface of an object is labeled, that is, in which the target object T is present are made closer. Thus, high-accuracy modeling can be realized, and at the same time, high-speed modeling can be realized.

The display control section 56 performs control of displaying the three-dimensional model 82 for the target object T on a user terminal 2, by causing a drawing process to be executed for a vicinity of the target object T, based on the depth model 80. Thus, in drawing the three-dimensional model 82, drawing of an area that does not affect the color of the three-dimensional model 82 when the three-dimensional model 82 is viewed in various directions is omitted, whereby an image is generated and displayed faster.

Moreover, the display control section 56 can perform control of displaying an image drawn in a network representation on an as-is basis that is generated in the three-dimensional model 82 for the target object T. Here, the three-dimensional model 82 for the target object T in a network representation refers to a representation form of a function created by a neural network. The representation form of the function created by the neural network is also referred to as, for example, an implicit function representation. When the three-dimensional model 82 is converted into a format using voxels, mesh, polygons, or the like, a data size turns enormous. However, the three-dimensional model 82 in a representation form of the implicit function representation has a small data size. Accordingly, the adoption of a network representation (implicit function representation) has an advantage, such as a high transfer rate when data on the three-dimensional model 82 is communicated (for example, at a time of download via the Internet). In other words, the display control section 56 can perform control of displaying the network representation on an as-is basis, without re-rendering the three-dimensional model 82 for the target object T.

Hereinabove, the model generation device to which the present service is applied has been described using FIGS. 3 to 5. Next, processing for higher-speed generation of a three-dimensional model in the present service is described more specifically. FIG. 5 shows an example of blocks for generating a three-dimensional model, in the model generation device having the functional configuration in FIG. 4.

First, concepts of a block and a voxel are described using FIG. 5. A coarse grid shown in FIG. 5 indicates boundaries of blocks obtained by dividing a virtual three-dimensional space in which the target object T in FIG. 1 is disposed into grid squares. Finer grids shown in FIG. 5 indicate boundaries demarcated by finer grid squares than blocks.

A slice SLk shown in FIG. 5 includes arrays of blocks LB and voxels VC at a certain Z-axis coordinate. In other words, each area obtained as a result of dividing the slice SLk based on a predetermined first unit is a voxel VC. For example, assuming that the voxel VC corresponds to the resolution of the ultimately generated three-dimensional model 82, processing is inefficient if the process of generating the three-dimensional model is executed on a voxel VC basis. Accordingly, individual areas obtained as a result of dividing the slice SLk based on a second unit that is larger than the first unit, in other words, areas, each made up of n voxels, are introduced as blocks BL1 to BL7 and BLK. In the example in FIG. 5, n is eight in total, given by four, in an X-axis direction, by four, in a Y-axis direction, by one, in a Z-axis direction. Note that hereinafter, the number of voxels is expressed as x × y, given that the number in the Z-axis direction is one. In other words, n = 4 × 4 voxels VC constitute each one of the blocks BL1 to BL7. Hereinafter, when it is not necessary to make a distinction among a plurality of voxels individually, the voxels are referred to as "voxel VC". Similarly, when it is not necessary to make a distinction among the individual blocks BL1 to BL7 and the like individually, the blocks are referred to as "block BL".

The areas of blocks BL indicated by thick lines in FIG. 5 are areas that can include respective objects in two portions T1 and T2 of the target object T. In other words, in the slice SLk, a distinction is made between the blocks BL that can include a surface of the target object T and the blocks BLK in an empty space. While the former blocks BL are reflected in the pixel value (color) of a predetermined pixel of a captured image G, the latter blocks BLK are not reflected. According, hereinafter, the former blocks BL are referred to as "processed block BL", and the latter blocks BLK are referred to as "non-processed block BLK".

In FIG. 5, to facilitate understanding of the present invention, a "processed block BL" is indicated by thick lines, and a "non-processed block BLK" is indicated by broken lines. Note that in FIGS. 3 to 5, only the "processed blocks BL" are depicted. Specifically, for example, in the example in FIG. 2, the areas that can include the two portions T1 and T2 of the target object T, respectively, are present in the slice SLk. For the area that can include the portion T1 of the target object T, the four processed blocks BL1 to BL4 are depicted. For the area that can include the portion T2 of the target object T, the three processed blocks BL5 to BL7 are depicted.

The surface labeling section 53 described in FIG. 4 performs labeling by determining the blocks BL that can include the surfaces of the portions T1 and T2 of the target object T as described above. A block enclosed by a thick frame indicates that the block is labeled as a block in which a surface of the target object T is present.

Then, the three-dimensional model generation section 55 generates data as training (modeling) data in such a manner that color information with regard to the processed blocks BL is learned (modeled), while the learning process is not executed for color information on the non-processed blocks BLK, and generates or updates the three-dimensional model 82. Thus, the process of generating or updating the three-dimensional model 82 is made faster. In other words, training data is generated with which, for example, learning of the non-processed blocks BLK1 to BLK3 in the captured image G (for example, the captured image G2 in FIG. 1) captured in a positive direction of a Y-axis of the portion T1 of the target object T is not performed.

Hereinabove, although an embodiment of the present invention has been described, the present invention is not limited to the above-described embodiment, and modifications, improvements, and the like made within the scope in which the object of the present invention can be achieved are considered to be included in the present invention.

For example, although the description is given in the embodiment, assuming that the number N of viewpoints P at which depth data is acquired is the same as the number M of viewpoints P at which image data is acquired, a configuration is not particularly limited thereto. In other words, the number N of viewpoints P at which depth data is acquired may be different from the number M of viewpoints P at which image data is acquired. Such a case can be implemented, for example, by first generating a depth model 80 from N pieces of depth data, and then using the depth model 80, calculating depth data at M viewpoints P that are different from the N viewpoints P from the depth model 80.

Moreover, for example, depth data may be data directly observed by a sensor, such as the lidar D, or may be data estimated from other data. In other words, for example, the depth data acquisition section may acquire actual depth data, or may acquire depth data at M viewpoints P corresponding to image data from a depth model 80 that is prepared in advance, not first generating or updating a depth model 80 and then obtaining depth data at M viewpoints P corresponding to image data.

Further, for example, although the camera C1 and the lidar D1 are fixed to each other by using the predetermined jig beforehand, and depth data and image data from the same viewpoint are acquired by calibrating the relative positions between the camera C1 and the lidar D1 and the respective measurement directions (lines of sight) according to the predetermined jig in the embodiment, a configuration is not particularly limited thereto. In other words, for a calibration technique, any of various and diverse techniques may be adopted. Specifically, for example, position information on a viewpoint P from which the camera C captures an image may be acquired by using GPS (Global Positioning System) technology or the like and recorded, and thereafter, depth data may be acquired by the lidar D from the same viewpoint by using the position information. Note that regarding order of acquiring data, needless to say, any one of the camera C and the lidar D may perform first.

Furthermore, the depth model 80 may be generated, for example, by using a technique of estimating a depth from image data, such as structure from motion.

The functional block diagram shown in FIG. 4 is only illustrative, and is not particularly limited. In other words, it suffices that an information processing system includes functionality and a database that can execute the above-described series of processes as a whole, and functional blocks that are used to implement the functionality are not particularly limited to the example in FIG. 4. The locations of the functional blocks and the database are not limited to FIG. 4, and may be any locations.

The above-described series of processes can be configured to be executed by hardware, and can be configured to be executed by using software. One functional block may be configured solely by using hardware, may be configured solely by using software, or may be configured by using a combination thereof.

When the series of processes is configured to be executed by using software, a program included in the software is installed into a computer or the like from a network or a recording medium. The computer may be a computer embedded in dedicated hardware. The computer may be a computer that can perform various functions by installing various programs, for example, a server, as well as a general-purpose smartphone or personal computer.

A recording medium including such a program is not only configured by using an undepicted removable medium that is distributed separately from the main unit of the device in order to provide the program to a user, but also configured by using a recording medium or the like that is provided to a user in a state of being embedded in the main body of the device.

Note that in the present description, a step of writing the program to be recorded on a recording medium absolutely includes processes that are executed on a time-series basis in the order of the processes, and also includes processes that are executed in parallel or individually even though the processes are not necessarily executed on a time-series basis. In the present description, it is assumed that the term system means a device as a whole including a plurality of units, a plurality of means, and the like.

To summarize, it suffices that the information processing system to which the present invention is applied is configured as follows, and various and diverse embodiments can be made. In other words, it suffices that the information processing device (for example, the model generation device 1 in FIG. 4) to which the present invention applied includes:
a depth data acquisition section (for example, the depth data acquisition section in FIG. 4) that acquires depth data (for example, the depth data measured by the lidars D1, D2 in FIG. 4) at each of N (N being an integer value of two or higher) viewpoints, the depth data indicating a depth from a predetermined viewpoint (for example, the viewpoint P1, P2 in FIG. 1) to a feature point of a target object;
an object surface labeling section (for example, the surface labeling section 53 in FIG. 4) that generates labeling data (for example, the labeled blocks BL in FIG. 5) indicating a result of labeling a surface of the target object, based on the N pieces of depth data;
an image data acquisition section (for example, the image data acquisition section 54 in FIG. 4) that acquires M (M being an integer value of N or lower) pieces of image data (for example, the image data G1, G2 in FIG. 1) obtained as a result of capturing images of the target object from viewpoints (for example, the viewpoints P1, P2 in FIG. 1) synchronized with M viewpoints, respectively, among the N viewpoints; and
a model generation section (for example, the three-dimensional model generation section 55 in FIG. 4) that generates a three-dimensional model for the target object, based on the M pieces of image data and the labeling data. Thus, modeling (learning process for color and the like) in a space in which the target object T is not present is omitted, and high-speed modeling is realized. Further, in modeling, when a high-definition grid (for example, voxels in FIG. 5) compared to blocks is to be generated, a technique can be adopted in which voxels in a space in which a surface of an object is labeled (that is, a block-unit space in which the target object T is present) are made closer. Thus, high-accuracy modeling can be realized, and at the same time, high-speed modeling can be realized.

The depth data acquisition section can include:
an actual depth data acquisition section (for example, the actual depth data acquisition section 51 in FIG. 4) that acquires M pieces of actual depth data obtained as a result of measurement from each of the M viewpoints in a real world; and
a depth data estimation section (for example, the depth data estimation section 52 in FIG. 4) that estimates N pieces of depth data based on the M pieces of actual depth data, and acquires the N pieces of depth data estimated.

The depth data acquisition section can be configured to acquire the depth data calibrated in such a manner as to have the same viewpoint as each of the M pieces of image data, as the depth data synchronized with the M viewpoints, respectively, among the N viewpoints.

A display control section (for example, the display control section 56 in FIG. 4) that performs control of displaying the three-dimensional model for the target object by drawing only a vicinity of the target object, based on the depth data can be further included. Thus, in a rendering process, rendering of an area in which the target object is not present is omitted, whereby a calculation load can be reduced, and the three-dimensional model can be drawn fast.

The display control section can be configured to perform control of displaying an image drawn in a network representation on an as-is basis that is generated in the three-dimensional model for the target object. Thus, the three-dimensional model is drawn in a network representation on an as-is basis.

### EXPLANATION OF REFERENCE NUMERALS

1 model generation device, 2 user terminal, 11 CPU, 19 storage unit, 21 drive, 31 removable medium, 51 actual depth data acquisition section, 52 depth data estimation section, 53 surface labeling section, 54 image data acquisition section, 55 three-dimensional model generation section, 56 display control section, 551 block skip determination part, 552 color learning part, 80 depth model, 81 labeling data, 82 three-dimensional model

## Claims

1. An information processing device comprising:
a depth data acquisition section that acquires depth data at each of N (N being an integer value of two or higher) viewpoints, the depth data indicating a depth from a predetermined viewpoint to a feature point of a target object;
an object surface labeling section that generates labeling data indicating a result of labeling a surface of the target object, based on the N pieces of depth data;
an image data acquisition section that acquires M (M being an integer value of N or lower) pieces of image data obtained as a result of capturing images of the target object from viewpoints synchronized with M viewpoints, respectively, among the N viewpoints; and
a model generation section that generates a three-dimensional model for the target object, based on the M pieces of image data and the labeling data.

2. The information processing device according to claim 1, wherein the depth data acquisition section includes:
an actual depth data acquisition section that acquires M pieces of actual depth data obtained as a result of measurement from each of the M viewpoints in a real world; and
a depth data estimation section that estimates N pieces of depth data based on the M pieces of actual depth data, and acquires the N pieces of depth data estimated.

3. The information processing device according to claim 1, wherein the depth data acquisition section is configured to
acquire the depth data calibrated in such a manner as to have the same viewpoint as each of the M pieces of image data, as the depth data synchronized with the M viewpoints, respectively, among the N viewpoints.

4. The information processing device according to claim 1, further comprising a display control section that performs control of displaying the three-dimensional model for the target object by drawing only a vicinity of the target object, based on the depth data.

5. The information processing device according to claim 4, wherein the display control section is configured to perform control of displaying an image drawn in a network representation on an as-is basis that is generated in the three-dimensional model for the target object.

6. An information processing method that is performed by an information processing device, the information processing method comprising:
a depth data acquisition step of acquiring depth data at each of N (N being an integer value of two or higher) viewpoints, the depth data indicating a depth from a predetermined viewpoint to a feature point of a target object;
an object surface labeling step of generating labeling data indicating a result of labeling a surface of the target object, based on the N pieces of depth data;
an image data acquisition step of acquiring M (M being an integer value of N or lower) pieces of image data obtained as a result of capturing images of the target object from viewpoints synchronized with M viewpoints, respectively, among the N viewpoints; and
a model generation step of generating a three-dimensional model for the target object, based on the M pieces of image data and the labeling data.
